# NEUE EUROPÄISCHE PATENTSCHRIFT

(11) **EP 0 737 132 B3**
(45) Veröffentlichungstag dieser Patentschrift: **30.01.2013**
(45) Hinweis auf die Patenterteilung: 12.03.2003
(21) Anmeldenummer: 95935843.3
(22) Anmeldetag: 30.10.1995
(51) Int. Cl.: B32B 31/00, B32B 7/02

(54) **POLYMERBESCHICHTETES MEHRSCHICHTMATERIAL UND VERFAHREN ZU SEINER HERSTELLUNG**
POLYMER-COATED MULTI-LAYER MATERIAL AND PROCESS FOR PRODUCING IT
PRODUIT MULTICOUCHE AVEC ENDUCTION DE POLYMERE ET PROCEDE DE FABRICATION

(30) Priorität: 02.11.1994 DE 4439031
(43) Veröffentlichungstag der Anmeldung: 16.10.1996
(73) Patentinhaber: Lanitz, Siegfried, 12163 Berlin (DE)
(72) Erfinder: LANITZ, Siegfried, D-12163 Berlin (DE); PIESOLD, Heinz, deceased (DE)
(74) Vertreter: Omsels, Hermann-Josef
(86) Internationale Anmeldenummer: PCT/DE1995/001526
(87) Internationale Veröffentlichungsnummer: WO 1996/014208

(56) Entgegenhaltungen:
- EP-A- 0 176 762
- EP-A- 0 299 439
- EP-A- 0 395 228
- EP-A- 0 584 818
- WO-A-94/03511
- DE-U- 8 708 307
- GB-A- 1 104 353
- US-A- 5 001 106
- RC Model World, Februar 1989, Seite 56, Rubric 'Shop Window'
- Produktinformation bez. 'Melinex' Polyesterfilm von ICI in 1975
- Produktinformation bez. 'Baycoll, Desmodur Polurethane based reaction adhesives', Bayer Technical Bulletin, 1990
- Produktinformation bez. 'Desmocoll' Polurethane-based adhesive, Technical Information Bulletin No. 3.1.2, Bayer AG, 1980

## Beschreibung

Die Erfindung betrifft ein Flugzeugbespannmehrschichtmaterial gemäß dem Oberbegriff des Anspruchs 1 und ein Verfahren zur Herstellung des Mehrschichtmaterials gemäß Anspruch 12.

Vergleichbare Folien sind bereits aus der EP 0 395 228 A1 und aus der US 5,001,106 bekannt. Die EP 0 395 228 A1 beschreibt dabei Folien, die mit einer Adhesivschicht und darauf mit einem Polymer aus Polyurethanen/Polyisocyanaten beschichtet sind; diese Folien werden im Automobilbau als Verkleidung verwendet. Die US 5,001,106 beschreibt ebenfalls vergleichbare Folien, die allerdings auf der einen Seite mit einer Toner- bzw. Tintenempfangsschicht versehen sind und als Kopierfolien dienen.

Mehrschichtige Materialien eignen sich für das großflächige Bespannen von Trägerrahmen im Flugzeugmodellbau und bei einmanntragenden Flugzeugen/Ultraleichtflugzeugen. Sie sind aber auch als Bild- und Druckempfangsmaterialien für mit normalen Papier arbeitende Kopiermaschinen geeignet und finden als wetterbeständige, selbstklebende Etiketten, Markierungsmaterialien oder in der Werbung ihre Anwendung.

Farbige Polyesterfolien, beispielsweise aus Polyethylentherephtalat, sind aufgrund ihrer physikalischen und chemischen Eigenschaften für das großflächige Bespannen von Flugzeugmodellen geeignet und bekannt. Auch sind derartige Folien aufgrund ihrer Witterungsbeständigkeit und hohen thermischen Belastbarkeit bei entsprechendem einseitigen Auftrag einer Toner- bzw. Tintenempfangsschicht als Bild- und Druckempfangsmaterial für mit normalen Papier arbeitende Kopiermaschinen bekannt.

Wie in der US 3,388,651, GB 1 104 353 und DD 285 247 beschrieben ist, zeichnen sich herkömmliche technische Lösungen dadurch aus, daß transparente Polyester-Trägerfolien mit einer wärmeaktivierbaren, pigmentierten und/oder eingefärbten polymeren Klebeschicht versehen sind. Weiterhin sind Polyester-Trägerfolien bekannt, bei denen eine pigmentierte duroplastische Polymerschicht über eine thermoplastische Polymerschicht mit der Trägerfolie verbunden ist und eine weitere thermoplastische Polymerschicht als Klebeschicht aufgebracht ist. Derartige Folien weisen üblicherweise ein relativ hohes Gewicht auf.

Als Material für die Abdeckung von Base-Holz-Gestellen im Flugzeugmodellbau sind auch faserige Trägermaterialien in Gewebeform aus Polyester mit Harzimprägnierungen bekannt (US 4,997,688); die hierbei zur Imprägnierung verwendeten Harzlösungen können durch Pigmente und/oder organische Farbstoffe gefärbt werden.

Nachteilig bei diesen bekannten technischen Lösungen ist beispielsweise, daß eine Abnahme der Klebkraft bei denjenigen Materialien zu beobachten ist, deren Färbung durch Auftragung pigmentierter Klebstoffe erfolgt. Hinzu kommt, daß der optische Eindruck der auf diese Weise hergestellten Bespannmaterialien stark von den Anwendungs- und Verarbeitungsbedingungen abhängig ist und eine kontinuierliche Qualität daher nicht gewährleistet ist. Aufgrund der Thermoplastizität solcher Klebstoffe kommt es beim Umspannen von Ecken und Kanten teilweise zu Farbaufrissen und Austreten der Farb-/Klebstoffschicht an den Kanten. Auch beim versehentlichen Zusammenbringen der Klebschicht und/oder bei der Korrektur der Flächenmaterialien kann die flächige Farbstruktur zerstört werden.

Wie beispielsweise in der EP 0 158 925 A2 beschrieben ist, kann es bei Polyesterfolien, deren duroplastische Farbschicht zwischen zwei thermoplastischen Polymerschichten, nämlich Haftgrund und Klebstoff, eingebettet ist, zur Ausbildung von kleinsten Löchern in der Farbschicht kommen. Der Grund dafür liegt darin, daß das Härtungsmittel, beispielsweise Isocyanat, bei Polyurethansystemen mit der thermoplastischen Haftschicht reagiert und beim Reaktionsvorgang Gase (z.B. CO₂, Wasser) frei werden, die die Farbschicht in Form kleinster Löcher unterbrechen.

Herkömmliche Tonerschichten werden - wie in der EP 0 588 723 A1 beschrieben - üblicherweise durch Verwendung von bicyclischen Alkyl-, 1-12-C aliphatischen Alkyl- oder aromatischen -(Meth)-acrylat mit bis zu 20% eines polaren Monomeren oder N,N-Dialkyl-mono-alkylamino-alkyl-(meth)-acrylat gebildet. Bekannt sind auch Lösungen aus polymerisiertem Diol-di-(meth)-acrylat mit Zusätzen von copolymerisiertem Vinylmonomer und copolymerisiertem Vinylester, (Meth)-acrylsäureester und/oder Styrol. Transparente, wässrige Tonerempfangsschichten aus wasserlöslichen Polymeren, mit Polymerpartikeln der Größe 1 bis 15 µ mit Zusätzen antistatischer Mittel finden ebenso häufig Anwendung. Bekannt sind ferner Toner-Fixierschichten aus Polyvinylacetalharz mit einem Acetalisierungsgrad von 20-40 mol%. Geeignet zur Herstellung transparenter Tonerschichten auf Polyester, z.B. Melinex- oder Hostaphanfolie, sind ferner wasserlösliche Cellulose-Polymere mit nichtionischen oder ionischen Inhaltsstoffen (US 5,198,306). Letztlich sind aus der US 5,084,340, US 5,126,193, US 5,126,194 und der US 5,126,195 glasklare Polyesterfolien mit Tintenempfangsschichten in der Zusammensetzung Vinylpyrrolidon, Partikeln eines Polyesters, eines Co-Polymers eines 2-6-C-Alkylenoxides, eines Polyvinylalkoholes und inerte Partikel bekannt. Dem Stand der Technik sind ebenso Folien aus Polyethylen, Polypropylen und Polycarbonat mit einer einseitigen Beschichtung als Tintenfixierschicht zu entnehmen, wobei diese Schicht aus Emulsionen/Dispersionen von Vinychlorid-Vinylacetat-Copolymer-Harz besteht. Im allgemeinen gewähren Zusätze von kolloidalem Siliziumoxid weitestgehende Blockfreiheit des Fertigmaterials.

Nachteilig bei den aufgeführten Folien ist - je nach Einsatzgebiet -, daß obwohl Polyesterfolien und Vliese als Ausgangsmaterialien für die witterungsbeständige Bespannung von Flugzeugmodellen prinzipiell geeignet sind, trotz hoher Reißfestigkeit solcher Materialien der Bespannungsgröße und gewichtsmäßigen Belastbarkeit Grenzen gesetzt sind und eine Verwendung, beispielsweise bei der Fertigung für einmanntragende Flugzeuge, daher nicht möglich ist.

Die mit den aufgeführten Tonerschichten versehenen Materialien sind in der Durchsicht glasklar bis milchig-trüb und geben die Kopie in der Farbe schwarz auf durchsichtigen und/oder milchig trüben Grund wieder. Sie sind aufgrund der Durchsichtigkeit des Materials wenig oder gar nicht werbewirksam.

Aufgabe der vorliegenden Erfindung ist es, bei heißschrumpfbaren farbigen Folien auf Polyethylentherephtalat-Basis die Gebrauchseigenschaften zu verbessern. In Abhängigkeit des Anwendungsgebietes der Folien soll dabei durch eine erfindungsgemäße Polymerbeschichtung der Folie zum einen die Oberflächenbeschaffenheit der duroplastischen Farbschicht verbessert, ferner die Reißfestigkeit der Folie erhöht werden und das Flächengewicht gesenkt werden, zum anderen sollen durch eine farbige Hinterlegung der Folie unter gleichzeitiger einseitiger Ausrüstung der Folie mit Haftklebestoff neue Anwendungsgebiete erschlossen werden. Auch soll die Folie derart beschichtet sein, daß dadurch ein Einsatz in Vervielfältigungstechniken ermöglicht wird.

Gelöst wird diese Aufgabe durch die im Patentanspruch 1 aufgeführten Merkmale. Durch diese erfindungsgemäßen Maßnahmen wird ein Flugzeugbespannmehrschichtmaterial für das großflächige Bespannen von Trägerrahmen im Flugzeugmodelbau, bei einmanntragenden Flugzeugen oder Ultraleichtflugzeugen geschaffen, welches die gefärbte Duroplastschicht mit der Trägerfolie aus Polyethylentherephtalat dauerhaft verbindet und andererseits durch die in den Patentansprüchen 2 und 3 angegebenen Merkmale, nämlich durch die vorherige Kaschierung der Trägerfolie mit Vliesen oder Geweben, die Reißfestigkeit verbessert.

Das erfindungsgemäße Flugzeugbespannmehrschichtmaterial weist verbesserte Gebrauchseigenschaften bei der Verarbeitung, sowie höhere Reißfestigkeit und bessere Wetterbeständigkeit gegenüber herkömmlichen Materialien auf. Insbesondere durch die sogenannte Coronavorbehandlung der Trägerfolie wird die Oberfläche der Folie durch chemische und physikalische Behandlung mittels Elektronenbeschuß derart modifiziert ("aufgerauht"), daß die Verbindbarkeit der Polymerbeschichtung zur Trägerfolie im Gegensatz zu herkömmlichen Methoden deutlich verbessert wird. Dies drückt sich darin aus, daß die Polymerbeschichtung besser mit der Folie verbunden ist. Vorraussetzung ist hierbei allerdings, daß die Polymerbeschichtung zeitlich unmittelbar auf die Coronabehandlung folgt.

Durch das Einbringen von Buntpigmenten und/oder fluoreszierenden Pigmenten und/oder organischen Farbstoffen in die Reaktionsmischung aus einem hydroxylgruppenhaltigen Polyurethan - vorzugsweise mit endständigen OH-Gruppen - und einem niedermolekularen linearen Polyisocyanat als Quervernetzer wird eine sehr homogene Farbgebung der Polymerschicht erreicht. Die Polymerisationszeit wird durch einen erfindungsgemäßen katalytischen Zusatz einer zinnorganischen Verbindung auf ca. 48 Stunden reduziert, während sie ohne Katalysator mehrere Tage beträgt.

Die Auftragung der Haftklebeschicht vollzieht sich im bekannten TransferVerfahren, indem als Klebstoff Haftklebestoffe auf Polyacryl-Basis bekannter Zusammensetzung eingesetzt werden, die als Lösung auf Silikonpapier aufgetragen werden und nach Abdunstung des Lösungsmittels mit der Trägerfolie unter Druck und Wärme verbunden werden.

Erfindungsgemäß ist es vorgesehen, daß die der Polymerbeschichtung abgewandte Seite der Trägerfolie eine transparente reaktive Schicht aufweist. Diese Schicht kann eine Toner- bzw. Tintenempfangsschicht, vorzugsweise aus Vinylacetat, sein, wobei die Tonerschicht zwischen 2 bis 8 g/m² Trägerfolie beträgt. Durch diese Maßnahme wird eine Polymerfolie mit kompakter oder durchscheinender farbiger Hinterlegung geschaffen, die ohne Beeinträchtigung der Text- und/oder Bildwiedergabequalität eines, als Bild- und Druckempfangsblatt für eine mit normalem Papier arbeitende Kopiermaschine dient. Auch eignen sich derartige Folien besonders gut für Werbezwecke, da sie über die schon oben erwähnte homogene Farbverteilung innerhalb der Polymerschicht verfügen und durch die duroplastischen Eigenschaften der Folie auch sehr witterungsbeständig sind.

Um den sog. Folienblockeffekt der Toner- bzw. Tintenempfangsschicht möglichst gering zu halten, werden der Tonerschicht gegebenenfalls 0,5 bis 5% eines zur Vermeidung dieses Effektes geeigneten Mittels eindispergiert. Diese Mittel können beispielsweise kolloidales Siliziumdioxid oder - bei wasserlöslichen Dispersionen - statt dessen bis zu max. 3% Reisstärke sein. Die reaktive Schicht kann eine lichtempfindliche Schicht sein, wodurch weitere Einsatzmöglichkeiten eröffnet werden.

Ferner ist erfindungsgemäß vorgesehen, daß die Folie mit einer Metallschicht geringer Dicke, nämlich < 1µ, die vorzugsweise aus Aluminium und/oder Chrom besteht, rückseitig zur Polymerbeschichtung, versehen ist. Durch diese Maßnahme wird das Flächengewicht der Folie deutlich herabgesetzt. Durch Auftragung der Metallschicht auf die farbig transparente Folie erscheint diese farbig und nicht durchscheinend. Gegenüber bekannten Methoden der Herstellung solcher Farbfolien können bei den erfindungsgemäßen Folien Gewichtsreduzierungen zwischen 25 und 30% erreicht werden; die chemischen und physikalischen Eigenschaften bleiben dabei unverändert.

Eine weitere Aufgabe besteht darin, ein Verfahren zur Herstellung des Mehrschichtmaterials zu schaffen. Gelöst wird diese Aufgabe durch die im Patentanspruch 13 aufgeführten Merkmale. Durch diese erfindungsgemäßen Maßnahmen wird ein Verfahren geschaffen, welches eine gleichbleibende Qualität des Mehrschichtmaterials gewährleistet. Dabei ist es erfindungsgemäß vorgesehen, daß gegebenenfalls auf der der Polymer- und Haftklebstoffbeschichtung abgewandten Seite der Trägerfolie eine reaktive Schicht aufgetragen wird, die beispielsweise aus einer Toner- bzw. Tintenempfangsschicht besteht, wobei gegebenenfalls Mittel zur Vermeidung eines Folienblockeffektes in diese eindispergiert werden. Um während des Verfahrensablaufes eine aus der Reibung an den Walzen resultierende elektrostatische Aufladung der Trägerfolie zu vermeiden bzw. zu reduzieren, wird die Folie erfindungsgemäß an Ionisierungsstäben vorbeigeführt, wodurch die Folie gegebenenfalls wieder entladen wird. Alternativ hierzu kann auch eine Metallschicht im Vakuumverdampfungsverfahren aufgetragen werden.

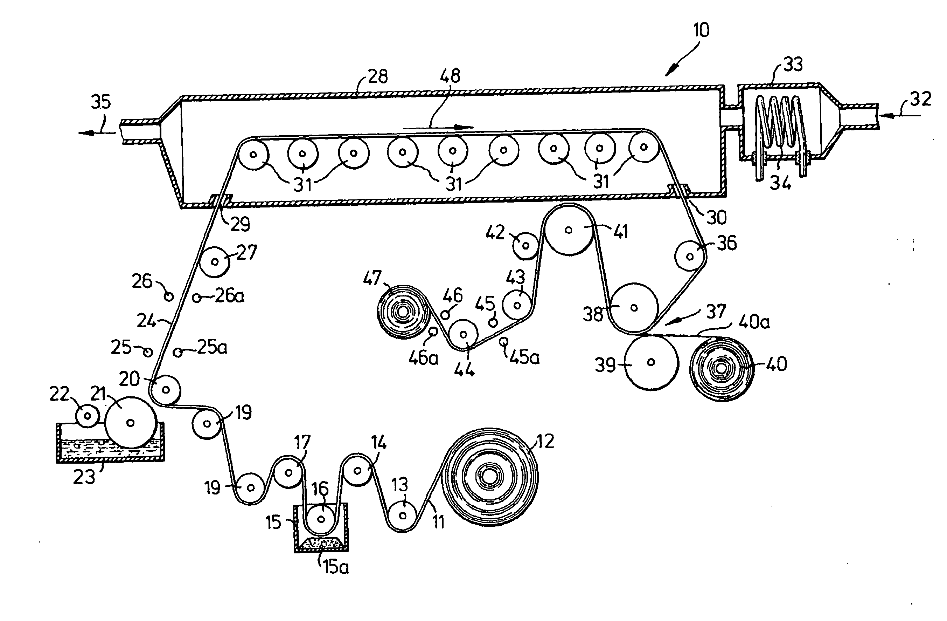

Weitere vorteilhafte Maßnahmen sind in den übrigen Unteransprüchen beschrieben. Die Erfindung ist anhand von Ausführungsbeispielen und in der beiliegenden Zeichnung dargestellt und wird nachfolgend näher beschrieben:

### A.

Die einzige Figur zeigt in schematischer Darstellung den Verfahrensablauf in der Anlage 10. Zur Farbbeschichtung wird von einer Vorratsrolle 12 eine Trägerfolie 11 aus Polyethylentherephtalat kontinuierlich abgerollt und über Leitwalzen 13 und 14 zu einer Anlage 15 geführt (sogen. Corona-Anlage), in der sich eine Walze 16 befindet. Um diese Walze 16 wird die Trägerfolie 11 derart geführt, daß ihre Oberfläche gegen die Vorrichtung 15a zur Behandlung der Oberfläche gerichtet ist. Wie lange die Oberfläche der Folie der Behandlung ausgesetzt ist, hängt von dem Umfang und der Drehgeschwindigkeit der Walze 16 ab. Die Corona-Anlage 15 ist dem Verfahrensablauf zuschaltbar, daß heißt bei Bedarf kann die Anlage eingeschaltet werden, in Abhängigkeit vom jeweiligen Verfahrensschritt.

Nach der Coronabehandlung der Trägerfolie 11 wird die Folie 11 weiter über Leitwalzen 17, 18 und 19 zu einem Walzenpaar, bestehend aus einer Gummiwalze 20 und einer verchromten Stahlwalze 21, geführt. Die Walze 21 dient als Schöpfwalze und läuft in einer Wanne 23. In dieser Wanne 23 befindet sich die (farbige) Polymerenmischung, die mittels einer mit Rakeln (nicht dargestellt) versehenden Rakelwalze 22 auf die Schöpfwalze 21 übertragen und auf diese Weise auch dosiert wird.

Die nunmehr (farb)beschichtete Folie 24 wird durch parallel angeordnete Paare von Ionisierungsstäben 25, 25a und 26, 26a geführt, um elektrostatische Aufladungen, die aus der Reibung an den Walzen resultieren zu vermindern bzw. zu beseitigen. Über ein Walzensystem 27, 31 und 36 wird die Folie 11, 24 durch einen mit einer Einlaßöffnung 29 und einer Auslaßöffnung 30 versehenen Trockenkanal 28 geführt, in dem das Lösungsmittel, beispielsweise Toluol, verdampft wird. Durch den Trockenkanal 28 wird aufgeheizte Luft geblasen, wobei die Zuluft 32 an Heizwendeln 34 eines Heizkörper 33 auf eine vorbestimmbare Temperatur aufgeheizt wird. Die Abluft 35 wird aus dem System entfernt. Die Trocknung der Folie 11, 24 erfolgt im Gegenstromverfahren 32, 35, 48.

Über ein Walzensystem 38, 41, 42, 43 und 44 wird die Folie anschließend zu einer Aufwickelwalze 47 geführt, wobei die Walze 41 mit einer - nicht dargestellten - Kühleinrichtung versehen ist, die eine Kühlung der aufgeheizten Folie bewirkt und so ein Blocken und/oder Zusammenkleben der Folie verhindert. Um elektrostatische Aufladungen zu vermindern bzw. zu beseitigen wird die Folie 11, 24 nochmals durch parallel angeordnete Paare von Ionisierungsstäben 45, 45a und 46, 46a geführt.

### B.

In einem leicht modifizierten Verfahrensablauf wird in derselben Anlage 10 ein einseitig silikonisiertes Papier 11 von der Vorratsrolle 12 abgewickelt und zu der Gummiwalze 20 geführt, an der sich bei diesem Verfahrensablauf die Beschichtung der Folie 11 mit Haftklebstoff vollzieht. Hierzu ist die Wanne 23 mit der entsprechenden (nicht dargestellten) Klebstoffmischung beladen, die über die Rakelwalze 22 und die Schöpfwalze 21 auf die Folie 11 transferiert wird. Die Corona-Anlage 15 ist bei diesem Verfahren nicht in Betrieb. Die Belagsmenge kann durch den Anpreßdruck der Schöpfwalze 21 an die Gummiwalze 20 gesteuert bzw. dosiert werden. Analog dem Verfahrensablauf A wird die beschichtete Folie 11 im Trockenkanal 28 getrocknet und anschließend zu einer Kaschiereinrichtung 37 geführt, die im Verfahrensablauf nach A nicht zugeschaltet ist. Die Kaschiereinrichtung 37 besteht aus einer beheizbaren Stahlwalze 38 und einer Hartgummiwalze 39. Zwischen diesen beiden Walzen 38 und 39 wird die Folie 11 hindurchgeführt. Gleichzeitig läuft von einer Abwickelvorrichtung 40 eine nach Verfahrensablauf A farbbeschichtete Folienbahn 40a durch die Kaschiereinrichtung 37. Durch den Druck der Walzen 38, 39 und die Wärme der beheizbaren Stahlwalze 38 erfolgt der Übergang des Klebstoffes vom Silikonpapier auf die Farbfolie. Das so hergestellte Mehrschichtenmaterial wird nun wieder über die Kühlwalze 41 und über Leitwalzen 42, 43, 44 zu der Aufwickelwalze 47 geführt. Analog dem Verfahrensablauf A erfolgt auch bei diesem Verfahrensablauf eine Entladung elektrostatischer Aufladungen durch die Ionisierungsstäbe 25, 25a, 26, 26a, 45, 45a, 46, 46a.

### C.

Analog den Verfahrensabläufen A und B kann die Wanne 23 auch mit einer Mischung beschickt werden, die zur Auftragung einer reaktiven Schicht, beispielsweise einer Toner- bzw. Tintenempfangsschicht geeignet ist. Diese Variante wird unmittelbar nach der Beschichtung der Folie 11, 24 mit Haftklebstoff durchgeführt.

### D.

Zur Erhöhung der mechanischen Eigenschaften, insbesondere der Reißfestigkeit, kann die Folie 11 auch mit einem Polyestervlies oder Gewebe verbunden werden. Diese Variante vollzieht sich vor der Beschichtung mit der duroplastischen Farbschicht analog Verfahrensablauf A. Hierzu wird die Wanne 23 mit der Klebstoffmischung beschickt und die mit Klebstoff beschichtete Folie 11, 24 wird dann anschließend nach Trocknung in der Kaschiereinrichtung 37 mit einem Vlies oder Gewebe 40a kaschiert. Anschließend wird dann die Beschichtung mit der duroplastischen Farbschicht durchgeführt.

### E.

Analog den vorherigen Verfahrensabläufen kann die farbig transparente Polyethylenterephthalatfolie, die über eine Schichtdicke von bis zu 10µ verfügt, auch mit einer Aluminiumschicht geringer Schichtdicke (< 1µ) versehen werden, die im (nicht dargestellten) Vakuumverdampfungsverfahren aufgetragen wird. Die Aufdampfung soll dabei erst nach einer Aushärtungszeit von mindestens 48 Stunden stattfinden.

Erfindungsgemäß ist es demnach vorgesehen, daß in einer einzigen Anlage alle Verfahrensschritte durchgeführt werden können. Diese einzelnen Verfahrensschritte sind zum Teil nacheinander in einem einzigen Verfahrensablauf zu bewerkstelligen; zum anderen müssen sie sukzessive durchgeführt werden, nach zuvorigem Wechseln der Beschickungsmaterialien.

### Ausführungsbeispiel 1:

10-15 Gew.-% eines Polyurethanpolymers mit endständigen Hydroxylgruppen mit einer OH-Zahl ≤5 werden in Toluol, Wassergehalt < 0,1%, gelöst. Zur Farbgebung werden in diese Lösung 12-15 Gew.-% eines Buntpigments, beispielsweise Titandioxid, und/oder eines fluoreszierenden Pigments und/oder eines organischen Farbstoffs eindispergiert. Dieser Lösung werden bis zu 1 Gew.-%, berechnet auf Lösung eines niedermolekularen Polyisocyanates und bis zu max. 0,05 Gew.-% einer zinnorganischen Verbindung als Katalysator zugesetzt. Diese Farblösung wird mit einem Naßgewicht, welches je nach Pigment zwischen 12-30 g/m² - bei Titandioxid z.B. mit 30 g/m² ± 1g - beträgt, mittels Toluol auf eine Auslaufzeit im DIN-Becher unter Verwendung einer 4 mm Düse von max. 90 sec. verdünnt. Anschließend wird die Lösung maschinell mittels herkömmlicher Walzenauftragsysteme auf unmittelbar coronavorbehandelte Polyethylentherephthalat-Folie (PETP-Folie) aufgetragen, wobei die PETP-Folie über eine definierte Schrumpfung von ca. 5% in Längs- und Querrichtung verfügt. Zur Einhaltung der Schrumpffähigkeit der PETP-Folie erfolgt die Trocknung der Farblösung bei max. 80°C. Bei diesem Trockenvorgang wird die Folie gleichzeitig fixiert. Die Belagsmenge der getrockneten Farbschicht beträgt, je nach Farbkörper, 15-30 g/m² PETP-Folie. Nach einer Zwischenlagerung von 48 Stunden unter Raumtemperatur, die nicht über 35 °C liegen soll, erfolgt der Auftrag eines Haftklebstoffes mit 21 g/m² ± 1g durch Transferbeschichtung. Als Klebstoff werden Haftklebstoffe auf der Basis von Polyacrylaten bekannter Zusammensetzung verwendet, die als Lösung auf Silikonpapier aufgetragen werden und nach Abdunstung des Lösungsmittels mit der PETP-Folie unter Druck und Wärme verbunden werden. Nach Abkühlung des Fertigmaterials ist der Haftklebstoff mit der duroplastischen Farbschicht verbunden und das Silikonpapier übernimmt bis zur Verarbeitung beim Verbraucher eine Schutzfunktion, um die aufgetragenen Schichten vor dem Zerkratzen und vor Staubpartikeln zu schützen.

### Ausführungsbeispiel 2:

Die Ausführung erfolgt wie beim Beispiel 1. Unmittelbar nach dieser Beschichtung mit Haftklebstoff erfolgt auf der Vorderseite der Folie der Auftrag der Toner- bzw. Tintenempfangsschicht. Hierzu wird eine Lösung von Polyvinylacetat in Toluol mit Toluol weiter bis zu einer Auslaufzeit im DIN-Becher, unter Verwendung einer 4 mm Düse auf 16 sec. verdünnt. Die Abdunstung des Lösungsmittels erfolgt bei 80 bis 85°C. Die Belagmenge beträgt zwischen 2 bis 8 g Trockengewicht/m² Folie.

### Ausführungsbeispiel 3:

Die Ausführung erfolgt wie beim Beispiel 2, wobei der Toner- bzw. Tintenempfangsschicht zwischen 0,5-5% kolloidales Siliziumdioxid zur Vermeidung des Folienblockeffektes zugesetzt wird. Die Eintragung des Siliziumdioxides erfolgt mittels Dispergierscheibe.

### Ausführungsbeispiel 4:

Das Verfahren nach Beispiel 1 wird wiederholt, wobei jedoch die verwendete PETP-Folie vor der Beschichtung, zur Erhöhung der mechanischen Eigenschaften, insbesondere der Reißfestigkeit, mit einem Polyestervlies verbunden wird. Zur Kaschierung der PETP-Folie mit dem Vlies wird ein 2-Komponenten-Klebstoff auf Basis von Polyurethan, gelöst in Toluol, verwendet. Diese Lösung wird mit 1 Gew.-%, berechnet auf Lösung Polyurethan, eines niedermolekularen Polyisocyanats, NCO-Gehalt ≈11,5%, 30 min. vor Verarbeitung der Lösung versetzt. Die Abdunstung des Lösungsmittels erfolgt bei 80°C. Nach einer 48 stündigen Lagerung unter Raumbedingungen, erfolgt entsprechend Beispiel 1 der Auftrag der Farblösung auf die Trägerfolie und anschließend der Auftrag des Haftklebestoffes.

### Ausführungsbeispiel 5:

Das Verfahren nach Beispiel 1 wird wiederholt, wobei jedoch statt des Haftklebestoffs ein wärmeaktivierbarer Klebstoff auf die Polymerbeschichtung der Trägerfolie aufgetragen wird. Der wärmeaktivierbare Klebstoff besteht aus einer Lösung eines linear aufgebauten hydroxylgruppenhaltigen Polyurethanpolymers mit einer OH-Zahl ≤5 in Toluol. Der Trockenauftrag des Klebstoffes soll 21 bis 25 g/m² Folie betragen. Die Abdunstung des Lösungsmittels erfolgt bei 80 bis 100°C. Zum Auftrag des wärmeaktivierbaren Klebstoffs wird, wie im Beispiel 1 erläutert, das Transfer-Verfahren angewendet.

### Ausführungsbeispiel 6:

Das Verfahren nach Beispiel 1 wird wiederholt, wobei eine farbig transparente PETP-Folie (5-10µ Schichtdicke) im Vakuumverdampfungsverfahren mit einer Aluminiumschicht (< 1µ Schichtdicke) versehen wird. Die so hergestellte Folie wird nun im Transferverfahren mit einem wärmeaktivierbaren Polyurethanklebstoff versehen. Zur Herstellung des Klebstoffes werden 12-15 Gew.-% eines Poyurethanpolymers mit einer OH-Zahl ≤5 in einem Gemisch von Toluol und Methylethylketon im Mischverhältnis 9:1 gelöst.

Statt eines wärmeaktivierbaren Polyurethanklebstoffes kann auch ein Haftklebstoff auf Polyacrylatbasis bekannter Zusammensetzung verwendet werden.

### Bezugszeichen

- 10: Anlage zur Herstellung eines Mehrschichtmaterials
- 11: Trägerfolie
- 12: Vorratsrolle
- 13: Leitwalze
- 14: Leitwalze
- 15: Corona-Anlage
- 15a: Vorrichtung zur Oberflächenbehandlung
- 16: Leitwalze zu 15
- 17: Leitwalze
- 18: Leitwalze
- 19: Leitwalze
- 20: Gummiwalze
- 21: Schöpfwalze
- 22: Rakelwalze mit Rakel
- 23: Wanne zur Polymerbeschichtung
- 24: beschichtete Folie
- 25: Ionisierungsstab
- 25a: Ionisierungsstab
- 26: Ionisierungsstab
- 26a: Ionisierungsstab
- 27: Leitwalze
- 28: Trockenkanal
- 29: Einlaßöffnung
- 30: Auslaßöffnung
- 31: Leitwalzen zu 28
- 32: Zuluft
- 33: Heizkörper
- 34: Heizwendeln
- 35: Abluft
- 36: Leitwalze
- 37: Kaschiereinrichtung
- 38: beheizbare Stahlwalze
- 39: Gummiwalze
- 40: Walze mit beschichteter Folienbahn oder Vlies
- 40a: beschichtete Folienbahn oder Vlies
- 41: Kühlwalze
- 42: Leitwalze
- 43: Leitwalze
- 44: Leitwalze
- 45: Ionisierungsstab
- 45a: Ionisierungsstab
- 46: Ionisierungsstab
- 46a: Ionisierungsstab
- 47: Aufwickelwalze für Fertigprodukt
- 48: Transportrichtung

## Patentansprüche

1. Flugzeugbespannmehrschichtmaterial für das großflächige Bespannen von Trägerrahmen im Flugzeugmodelbau, bei einmanntragenden Flugzeugen oder Ultraleichtflugzeugen, bestehend aus einer heißschrumpfbaren Trägerfolie auf Polyesterbasis mit zwei Seiten, welche zumindest auf der einen Seite mit einem Polymer beschichtet ist, wobei dieser Polymer wiederum mit einem thermoplastischen Haftklebstoff verbundenen ist,
a) wobei die Polymerbeschichtung durch Umsetzung eines hydroxylgruppenhaltigen Polyurethanpolymeren mit einer OH-Zahl ≤ 5 mit einem niedermolekularen linearen Polyisocyanat im Verhältnis bis zu 20:1, bezogen auf Festkörper Polyurethanpolymer hergestellt worden ist,
b) und wobei die Trägerfolie unmittelbar vor dem Auftragen der Polymerbeschichtung Corona-vorbehandelt wurde,
**dadurch gekennzeichnet,**
c) **daß** die Polymerbeschichtung mit einem Zusatz von Buntpigmenten und/oder fluoreszierenden Pigmenten und/oder organischen Farbstoffen hergestellt worden ist, und
d) **daß** der thermoplastischen Haftklebstoff zuerst als Lösung auf Silikonpapier aufgetragen und nach dem Abdunsten des betreffenden Lösungsmittels die resultierende Haftklebeschicht durch Druck-Wärme-Behandlung auf die abgetrocknete Polymerbeschichtung der Trägerfolie aufgetragen ist.
e) und **daß** gegebenenfalls auf der der Polymer- und Haftklebstoffbeschichtung abgewandten Seite der Trägerfolie eine transparente reaktive Schicht oder eine Metallschicht aufgetragen ist.

2. Mehrschichtmaterial nach Anspruch 1, **dadurch gekennzeichnet, daß** die Trägerfolie mittels eines Polyestervlieses oder eines Gewebes kaschiert ist.

3. Mehrschichtmaterial nach Anspruch 2, **dadurch gekennzeichnet, daß** das Polyestervlies oder das Gewebe mit der Trägerfolie über einen durch Umsetzung aus einem linear aufgebauten hydroxylgruppenhaltigen Polyurethanpolymer mit einer OH-Zahl ≤ 5 5 und einem niedermolekularen Polyisocyanat mit einem NCO-Gehalt ≤ 11,5% im Verhältnis Polyurethan zu Polyisocyanat 8:1 bis 12:1 erhaltenen Klebstoff verbunden ist.

4. Mehrschichtmaterial nach Anspruch 1, **dadurch gekennzeichnet, daß** die Polymerbeschichtung mit einem katalytischen Zusatz einer organischen Zinnverbindung bis 0,05 Gew.-%, bezogen auf eine 15%ige Lösung von Festkörper Polyurethanpolymer hergestellt worden ist.

5. Mehrschichtmaterial nach Anspruch 1, **dadurch gekennzeichnet, daß** die reaktive Schicht eine Toner- bzw. Tintenempfangsschicht ist.

6. Mehrschichtmaterial nach Anspruch 1, **dadurch gekennzeichnet, daß** die reaktive Schicht eine lichtempfindliche Schicht ist.

7. Mehrschichtmaterial nach Anspruch 5 oder 6, **dadurch gekennzeichnet, daß** die reaktive Schicht eine Schichtdicke zwischen 2 bis 8 g/m2 Trägerfolie aufweist.

8. Mehrschichtmaterial nach Anspruch 7, **dadurch gekennzeichnet, daß** die reaktive Schicht aus Vinylacetat besteht.

9. Mehrschichtmaterial nach Anspruch 7 oder 8, **dadurch gekennzeichnet, daß** gegebenenfalls der Tonerschicht 0,5 bis 5 Gew.-% Mittel zur Vermeidung eines Folienblockeffektes eindispergiert sind.

10. Mehrschichtmaterial nach Anspruch 1, **dadurch gekennzeichnet, daß** die Metallschicht aus Aluminium und/oder Chrom besteht.

11. Mehrschichtmaterial nach Anspruch' 10, **dadurch gekennzeichnet, daß** die Metallschicht eine Schichtdicke kleiner als 1 Mikrometer (< 1µ) aufweist.

12. Verfahren zur Herstellung eines Mehrschichtmaterials nach den Ansprüchen 1 bis 11, **dadurch gekennzeichnet, daß** man die Beschichtung herstellt
a) indem man eine auf einer Vorratsrolle aufgewickelte Polyester-Trägerfolie kontinuierlich von dieser Rolle abwickelt,
b) die Folie durch eine Corona-Anlage zur physikalischen Behandlung der Trägerfolienoberfläche hindurchführt,
c) unmittelbar anschließend mittels eines Walzenauftragsystems eine Polymerbeschichtung der Trägerfolie durchführt,
d) worauf man die Trägerfolie zur Abdunstung von Lösungsmitteln und zur Fixierung durch einen Trockenkanal führt,
e) wonachman gegebenenfalls eine aus einem Walzensystem bestehende und mit einer beheizbaren Walze versehene Kaschiereinrichtung zur weiteren Beschichtung einer Tägerfolienseite zuschaltet,
f) worauf man zur Abkühlung die beschichtete Trägerfolie durch eine mit einer Kühlanlage versehene Abkühleinrichtung führt,
g) worauf man die Trägerfolie auf einer weiteren Vorratsrolle aufwickelt,
h) nach Auftragen der ersten Beschichtung die Verfahrensschritte a) bis g) zum Auftragen einer weiteren Beschichtung wiederholt,
i) und eine Haftklebeschicht durch Transferbeschichtung aufträgt.

13. Verfahren nach Anspruch 12, dadurch gekenpzeichnet, daß man j) im Verfahrensschritt h) auf der der Polymer und Haftklebstoffbeschichtung abgewandten Seite der Trägerfolie eine reaktive Schicht aufträgt.

14. Verfahren nach Anspruch 12, **dadurch gekennzeichnet, daß** man k) in die Beschichtungsmischung des Verfahrensschrittes c) als Zusatzstoffe farbgebende Mittel hinzu gibt.

15. Verfahren nach Anspruch 13, **dadurch gekennzeichnet, daß** man I) Mittel zur Vermeidung eines Folienblockeffektes in die reaktive Schicht eindispergiert.

16. Verfahren nach den Ansprüchen 12 bis 15, **dadurch gekennzeichnet, daß** man m) die Trägerfolie durch mindestens zwei, eine elektrostatische Aufladung vermindernde, Ionisierungsstäbe hindurchführt.

17. Verfahren nach Anspruch 12, **dadurch gekennzeichnet, daß** man n) im Verfahrensschritt h) auf der der Polymer und Haftklebstoffbeschichtung abgewandten Seite der Trägerfolie im Vakuumverdampfungsverfahren eine Metallschicht aufträgt.

18. Verfahren nach einem oder mehreren der Ansprüche 12 bis 17, **dadurch gekennzeichnet, daß** man P) zwischen den einzelnen Verfahrensschritten jeweils eine vorbestimmbare Polymerisationszeit abwartet.

## Claims

1. Aircraft-covering multilayer material for the extensive covering of carrier frames in model aircraft construction, for single person aircraft or ultra-light aircraft, consisting of a heat-shrinkable supporting film of a polyester base with two sides, coated with a polymer at least on one side, whereby the polymer is connected with a thermoplastic contact adhesive,
a) whereby the polymer coating is produced by reaction between a polyurethane polymer containing hydroxyl groups with a hydroxyl number ≤ 5 and a low molecular linear polyisocyanate in a ratio of 20:1, with reference to solid polyurethane polymer,
b) and whereby the supporting film has been corona-pretreated immediately before the application of the polymer coating,
**characterised in that**
c) the polymer coating is produced with an additive consisting of coloured pigments and/or fluorescent pigments and/or organic toners, and
d) that the thermoplastic contact adhesive is applied first as a solution to silicone paper and alter the solvent has evaporated the resulting contact adhesive is applied under heat and pressure to the dried polymer coating of the supporting film, and
e) that, if necessary, a transparent reactive layer or a metallic layer is applied to the other side of the supporting film to that containing the polymer and contact adhesive layer.

2. Multilayer material as claimed in Claim 1, **characterised in that** the supporting film is laminated using a polyester non-woven fabric or a woven fabric.

3. Multilayer material as claimed in Claim 2, **characterised in that** the polyester non-woven fabric or woven fabric is bonded to the supporting film by means of an adhesive obtained by reaction between a linearly structured polyurethane polymer containing hydroxyl groups with a hydroxyl number ≤ 5 and a low molecular polyisocynate with an NCO content ≤ 11.5%, with a ratio between the polyurethane and the polyisocyanate of between 8:1 and 12:1.

4. Multilayer material as claimed in Claim 1, **characterised in that** the polymer coating is produced with a catalytic additive consisting of an organic tin compound of up to 0.05 weight per cent, with reference to a 15% solution of solid polyurethane polymer.

5. Multilayer material as claimed in Claim 1, **characterised in that** the reactive layer is a toner or ink receiving layer.

6. Multilayer material as claimed in Claim 1, **characterised in that** the reactive layer is a light-sensitive layer.

7. Multilayer material as claimed in Claim 5 or 6, **characterised in that** the reactive layer comprises of a supporting film with a thickness of between 2 and 8 g/m².

8. Multilayer material as claimed in Claim 7, **characterised in that** the reactive layer consists of vinyl acetate.

9. Multilayer material as claimed in Claim 7 or 8, **characterised in that**, if necessary, 0.5 to 5 per cent weight of an agent is dispersed in the toner layer to avoid a blocking effect.

10. Multilayer material as claimed in Claim 1, **characterised in that** the metallic layer consists of aluminium and/or chromium.

11. Multilayer material as claimed in Claim 10, **characterised in that** the metallic layer has a thickness of less than 1 micrometer (< 1 µ).

12. Process for the production of a multilayer material as in Claims 1 to 11, **characterised in that** the layer is produced
a) by continuously unrolling a supply of polyester supporting film from a reel,
b) feeding the film through a corona discharge unit in order to physically treat the surface of the supporting film,
c) this is followed immediately by the application of a coating to the supporting film by means of a roll coater,
d) the supporting film is then fed through a drying tunnel in order to vaporise the solvents and fix the film,
e) if necessary, a laminating device is then connected, which consists of a system of rolls and is provided with a heated roll for additionally coating one side of a supporting film,
f) whereupon the coated film is cooled by being fed through a cooling system provided with a refrigerating device,
g) whereupon the supporting film is wound around another reel,
h) following application of the first coating, the stages a) to g) of the process for applying an additional coating are repeated,
i) and an impact adhesive layer is applied by means of transfer coating.

13. Process as claimed in Claim 12, **characterised in that**
j) in stage h) of the process, in which a reactive layer is applied to the side opposite the polymer and contact adhesive coating.

14. Process as claimed in Claim 12, **characterised in that** k) a colouring agent is used as an additive in stage c) of the process.

15. Process as claimed in Claim 13, **characterised in that** I) an agent is dispersed in the reactive layer to prevent a blocking effect.

16. Process as claimed in Claims 12 to 15, **characterised in that**
m) the supporting film is fed between at least two ionising rods in order to reduce the build up of static electricity.

17. Process as claimed in Claim 12, **characterised in that**
n) in stage h) of the process, in which a metallic layer is applied, using the vacuum vaporisation process, to the side opposite the polymer and contact adhesive coating.

18. Process as in one or several of the Claims 12 to 17, **characterised in that**
p) a predetermined period is allowed between the individual stages of the process to enable polymerisation to take place.

## Revendications

1. Matériau multicouche d'habillage pour avion pour habiller les grandes surfaces des cellules ou cadres porteurs dans les modèles réduits aériens, les avions monoplace ou les U.L.M., composé d'un film de support thermorétractable à base de polyester à deux faces, revêtu au moins sur l'une des deux faces d'un polymère, ce dernier étant à son tour lié à un adhésif thermoplastique,
a) le revêtement polymère ayant été fabriqué par la réaction d'un polymère de polyuréthane hydroxylé avec un nombre OH ≤ 5 et d'un polyisocyanate linéaire de faible poids moléculaire dans une proportion pouvant aller jusqu'à 20:1, rapporté au polymère de polyuréthane solide,
b) et le film de support ayant subi un prétraitement Corona immédiatement avant l'application du revêtement polymère,
**caractérisé par le fait,**
c) **que** le revêtement polymère a été fabriqué avec addition de pigments de couleur et/ou de pigments fluorescents et/ou de colorants organiques et
d) **que** l'adhésif thermoplastique a d'abord été appliqué sous forme de solution sur du papier silicone et qu'après évaporation du solvant en question, la couche adhésive en résultant a été appliquée par traitement thermique et pression sur le revêtement polymère sec,
e) et **que** l'on applique éventuellement une couche réactive transparente ou une couche métallique sur la face du film de support opposée au revêtement adhésif et polymère.

2. Matériau multicouche selon la revendication n° 1, **caractérisé par le fait que** le film de support est doublé de polyester non-tissé ou d'une toile.

3. Matériau multicouche selon la revendication n° 2, **caractérisé par le fait que** le polyester non-tissé ou la toile est assemblé au film de support par une colle obtenue par réaction d'un polymère de polyuréthane hydroxylé à structure linéaire avec un nombre OH ≤5 et d'un polyisocyanate de faible poids moléculaire d'une teneur en NCO- ≤ 11,5 %, dans un rapport polyuréthane-polyisocyanate compris entre 8:1 et 12:1.

4. Matériau multicouche selon la revendication n° 1, **caractérisé par le fait que** le revêtement polymère a été fabriqué par addition d'un composé d'étain organique à action catalytique jusqu'à 0,05 % en poids, par rapport à une solution de 15 % de polymère de polyuréthane solide.

5. Matériau multicouche selon la revendication n° 1, **caractérisé par le fait que** la couche réactive est une couche réceptrice de toner ou d'encre.

6. Matériau multicouche selon la revendication n° 1, **caractérisé par le fait que** la couche réactive est une couche photosensible.

7. Matériau multicouche selon la revendication n° 5 ou 6, **caractérisé par le fait que** la couche réactive présente une épaisseur de 2 à 8 g par m² de film de support.

8. Matériau multicouche selon la revendication n° 7, **caractérisé par le fait que** la couche réactive est en acétate de vinyle.

9. Matériau multicouche selon la revendication n° 7 ou 8, **caractérisé par le fait que** 0,5 à 5 % en poids d'une substance destinée à prévenir un effet de blocking des feuilles ont, le cas échéant, été dispersés dans la couche toner.

10. Matériau multicouche selon la revendication n° 1, **caractérisé par le fait que** la couche métallique est en aluminium et/ou en chrome.

11. Matériau multicouche selon la revendication n° 10, **caractérisé par le fait que** la couche métallique présente une épaisseur inférieure à 1 micromètre (< 1 µ).

12. Procédé de fabrication d'un matériau multicouche selon les revendications 1 à 11, **caractérisé par le fait que** l'on fabrique le revêtement
a) en déroulant continuellement de la bobine de stockage où il est enroulé le film de support en polyester,
b) en faisant passer le film dans un système Corona en vue d'un traitement physique de sa surface,
c) en effectuant immédiatement après, à l'aide d'un système d'enduction par rouleaux, un revêtement polymère du film de support,
d) après quoi on fait passer le film de support dans un tunnel de séchage pour dissiper les vapeurs de solvant et pour fixer le revêtement,
e) après quoi on connecte éventuellement, en vue du revêtement d'une autre face du film de support, une doubleuse composée d'un système de rouleaux et munie d'un cylindre chauffant,
f) après quoi on fait refroidir le film de support en le faisant passer dans un dispositif équipé d'un système de refroidissement,
g) après quoi on enroule le film de support sur une autre bobine de stockage,
h) en répétant, après application du premier revêtement, les étapes a) à g) du procédé en vue de l'application d'un revêtement supplémentaire,
i) et en appliquant par transfert une couche adhésive.

13. Procédé selon la revendication n° 12, **caractérisé par le fait que**
j) l'on applique à l'étape h) une couche réactive sur la face du film de support opposée au revêtement polymère et adhésif.

14. Procédé selon la revendication n° 12, **caractérisé par le fait que**
k) l'on ajoute au mélange du revêtement de l'étape c) des substances additives colorantes,

15. Procédé selon la revendication n° 13, **caractérisé par le fait que**
l) l'on disperse dans la couche réactive des substances destinées à prévenir le phénomène de blocking des films.

16. Procédé selon les revendications n° 12 à 15, **caractérisé par le fait que**
m) l'on fait passer le film de support entre au moins deux barres ionisantes diminuant une charge électrostatique.

17. Procédé selon la revendication n° 12, **caractérisé par le fait que**
n) l'on applique par évaporation sous vide, à l'étape h), une couche métallique sur la face du film de support opposée au revêtement polymère et adhésif.

18. Procédé selon une ou plusieurs des revendications n° 12 à 17, **caractérisé par le fait que**
P) l'on observe entre chaque étape du procédé un temps de polymérisation définissable à l'avance.
